# EUROPÄISCHE PATENTANMELDUNG

(11) **EP 4 729 245 A1**
(43) Veröffentlichungstag der Anmeldung: **22.04.2026**
(21) Anmeldenummer: 24207887.1
(22) Anmeldetag: 21.10.2024
(51) Int. Cl.: B25J 9/16

(54) **SYSTEM, VERWENDUNG UND VERFAHREN ZUR SICHEREN STEUERUNG EINES INDUSTRIEROBOTERS, INSBESONDERE EINES CONTAINERKRANS**

(71) Anmelder: SICK AG, 79183 Waldkirch (DE)
(72) Erfinder: Stein, Patrick, 79189 Bad Krozingen (DE)
(74) Vertreter: Manitz Finsterwald Patent- und Rechtsanwaltspartnerschaft mbB

(57) **Zusammenfassung**

Die Erfindung betrifft ein System zur sicheren Steuerung zumindest eines Industrieroboters, insbesondere eines Krans zum Bewegen von Containern, umfassend eine Verarbeitungsvorrichtung und zumindest einen Umgebungssensor, insbesondere einen Radar-Sensor oder einen LiDAR-Sensor, wobei der Umgebungssensor dazu ausgebildet ist, zumindest einen Teil eines Arbeitsbereichs und/oder einer Umgebung des Industrieroboters zu erfassen und dabei Abstandsdaten, insbesondere über zumindest ein unkritisches Objekt und/oder über zumindest ein kritisches Objekt in dem Teil des Arbeitsbereichs und/oder der Umgebung des Industrieroboters, zu gewinnen, wobei die Verarbeitungsvorrichtung dazu ausgebildet ist, insbesondere zu bestimmten Zeitpunkten während des Ablaufs einer Aktion des Industrieroboters, diejenigen Datenanteile über das unkritische Objekt in den gewonnenen Abstandsdaten zu erkennen, die gewonnenen Abstandsdaten anhand der erkannten Datenanteile über das unkritische Objekt zu bearbeiten, das kritische Objekt in den bearbeiteten Abstandsdaten zu erkennen, und auf die Erkennung des kritischen Objekts hin den Industrieroboter in einen abgesicherten Steuerungsmodus zu versetzen.

## Beschreibung

Die Erfindung betrifft ein System, eine Verwendung eines Systems und ein Verfahren zur sicheren Steuerung zumindest eines Industrieroboters, insbesondere eines Krans zum Bewegen von Containern.

Einerseits soll bei der sicheren Steuerung des Industrieroboters die Sicherheit eines kritischen Objekts, das sich in dem Arbeitsbereich und/oder der Umgebung des Industrieroboters befinden kann, insbesondere durch Vermeidung von Kollisionen, gewährleistet werden. Des Weiteren ist eine Steigerung der Produktivität und Effizienz durch Vermeidung und/oder Reduktion von (sicherheitsbedingten) Stillstandzeiten und Geschwindigkeitsreduktionen des Industrieroboters gewünscht. Um diese Anforderungen an die sichere Steuerung des Industrieroboters zu erfüllen, sollte das kritische Objekt in dem Arbeitsbereich und/oder der Umgebung des Industrieroboters möglichst sicher und mit hoher Verfügbarkeit (d.h. möglichst wenig Fehlerkennungen) erkannt werden. Dabei können die hierin verwendeten Begriffe sicher oder Sicherheit im Sinne von bestimmten sicherheitsspezifischen Normen verstanden werden, wie beispielsweise ISO 13849 oder IEC 62998.

Unter einem Industrieroboter kann auch ein Industriefahrzeug zu verstehen sein. Es versteht sich, dass, auch wenn hierhin nur von einem Industrieroboter die Rede ist, auch mehrere Industrieroboter gemeint sein können. Der Industrieroboter kann manuell gesteuert werden, sich teilautomatisiert bewegen und/oder sich vollautomatisiert bewegen. Mit einem Industrieroboter kann ein Kran gemeint sein, insbesondere ein schienengebundener (Portal-)Kran zum Bewegen von Containern. Mit einem Industrieroboter kann auch eine Baumaschine oder Baufahrzeug, eine Landwirtschaftsmaschine oder ein Landwirtschaftsfahrzeug, eine Forstwirtschaftsmaschine oder ein Forstwirtschaftsfahrzeug, eine Bergbaumaschine oder Bergbaufahrzeug, eine Erdarbeitsmaschine oder ein Erdarbeitsfahrzeug, oder eine Reinigungsmaschine oder ein Reinigungsfahrzeug gemeint sein.

Unter einem kritischen Objekt können ein Gegenstand, ein Tier oder eine Person gemeint sein. Es versteht sich, dass, auch wenn hierin nur von einem kritischen Objekt die Rede ist, auch mehrere kritische Objekte gemeint sein können. Das kritische Objekt kann sich aufgrund der Durchführung manueller Tätigkeiten oder Überprüfungen, z.B. Entfernung oder Anbringung von Container-Sicherungen oder sogenannten "Twistlocks", in dem Arbeitsbereich und/oder der Umgebung des Industrieroboters befinden. Eine typische Gefahrensituationen kann eine mögliche Kollision des Industrieroboters und/oder der vom Industrieroboter bewegten Fracht, insbesondere eines Containers, mit dem im Arbeitsbereich und/oder der Umgebung des Industrieroboters anwesenden kritischen Objekt, z.B. beim Verladen des Containers auf ein Transportfahrzeug, betreffen.

Eine Erfassung, insbesondere räumliche dreidimensionale Erfassung, des Arbeitsbereichs und/oder der Umgebung des Industrieroboters mittels Umgebungssensoren kann die Erkennung des kritischen Objekts ermöglichen. Dafür bedarf es jedoch einer Sensor-Technologie, welche die sichere Erkennung des kritischen Objekts unter möglichst vielen verschiedenen Umgebungsbedingungen sicherstellt und/oder einen sicheren Zustand des Industrieroboters herstellt. Die Umgebungssensoren bestehender Systeme können in ihrer Reichweite und Winkelauflösung limitiert und/oder (z.B. bei Verschmutzung, Nebel und/oder Niederschlag) unzuverlässig sein, sodass die sichere Erkennung des kritischen Objekts in bestehenden Systemen entweder eine hohe Anzahl an Umgebungssensoren erfordern und/oder sogar in bestehenden Systemen nicht realisierbar sein kann. Auch unter dem Aspekt des Aufwands in der Datenprozessierung können bestehende System daher kostenintensiv und ineffizient sein.

Der Erfindung liegt die Aufgabe zugrunde, Systeme zur sicheren Steuerung eines Industrieroboters, und insbesondere zur sicheren Erkennung eines kritischen Objekts in dem Arbeitsbereich und/oder der Umgebung des Industrieroboters, zu verbessern, insbesondere sicherer und/oder effizienter zu gestalten.

Zur Lösung der Aufgabe ist ein System mit den Merkmalen des Anspruchs 1 vorgesehen. Vorteilhafte Ausbildungen der Erfindung sind den Unteransprüchen, der Beschreibung und den Zeichnungen zu entnehmen.

Das erfindungsgemäße System zur sicheren Steuerung zumindest eines Industrieroboters, insbesondere eines Krans zum Bewegen von Containern, umfasst eine Verarbeitungsvorrichtung und zumindest einen Umgebungssensor, insbesondere einen Radar-Sensor oder einen LiDAR-Sensor, wobei der Umgebungssensor dazu ausgebildet ist, zumindest einen Teil eines Arbeitsbereichs und/oder einer Umgebung des Industrieroboters zu erfassen und dabei Abstandsdaten, insbesondere über zumindest ein unkritisches Objekt und/oder über zumindest ein kritisches Objekt in dem Teil des Arbeitsbereichs und/oder der Umgebung des Industrieroboters, zu gewinnen. Die Verarbeitungsvorrichtung ist dazu ausgebildet, insbesondere zu bestimmten Zeitpunkten während des Ablaufs einer Aktion des Industrieroboters, diejenigen Datenanteile über das unkritische Objekt in den gewonnenen Abstandsdaten zu erkennen und die gewonnenen Abstandsdaten anhand der erkannten Datenanteile über das unkritische Objekt zu bearbeiten, wobei die erkannten Datenanteile über das unkritische Objekt vorzugsweise aus den gewonnen Abstandsdaten gefiltert werden. Die Verarbeitungsvorrichtung ist ferner dazu ausgebildet, das kritische Objekt in den bearbeiteten (insbesondere gefilterten) Abstandsdaten zu erkennen und auf die Erkennung des kritischen Objekts hin den Industrieroboter in einen abgesicherten Steuerungsmodus zu versetzen.

Der Erfindung liegt in anderen Worten die Erkenntnis zugrunde, dass die Datenanteile über das unkritische Objekt (insbesondere zu (vor-)bestimmten Zeitpunkten während des Ablaufs einer Aktion des Industrieroboters) erkannt werden (und insbesondere bekannt sein) können. Die gewonnenen Abstandsdaten werden dann anhand der erkannten Datenanteile über das unkritische Objekt bearbeitet, sodass die Datenanteile über das unkritische Objekt bei der Erkennung des kritischen Objekts unberücksichtigt bleiben und/oder ignoriert werden können. Auf diese Weise kann die Sicherheit und/oder die Effizienz des Systems erhöht werden.

So kann beispielsweise die Position, Bewegung, radiale Geschwindigkeit und/oder Intensität des unkritischen Objekts zu bestimmten Zeitpunkten während des Ablaufs einer Aktion des Industrieroboters bekannt sein. Die Datenanteile über das bekannte unkritische Objekt können dann bei der Erkennung des kritischen Objekts unberücksichtigt bleiben und/oder ignoriert werden, indem die Datenanteile über das unkritische Objekt in den gewonnenen Abstandsdaten erkannt und vorzugsweise aus den gewonnenen Abstandsdaten herausgefiltert werden. Auf diese Weise kann ein breiterer Erfassungsbereich des Umgebungssensors erreicht werden, der das unkritische Objekt (und seine Bewegungspositionen) miteinschließt. Nach der Erkennung, insbesondere Ausfilterung, des (erwarteten) unkritischen Objekts wird nur noch das (unerwartete) kritische Objekt (z.B. dessen Bewegung oder Atmung) in den bearbeiteten, insbesondere gefilterten, Abstandsdaten erkannt. Auf diese Weise kann das kritische Objekt sicher und effizient erkannt und eine sichere und/oder effiziente Steuerung des Industrieroboters realisiert werden.

Unter der Bearbeitung der gewonnenen Abstandsdaten anhand der erkannten Datenanteile über das unkritische Objekt kann zu verstehen sein, dass die erkannten Datenanteile über das unkritische Objekt bestimmt, markiert, herausgefiltert, ausgeschnitten, herausgerechnet, extrahiert und/oder entfernt werden. Die Verarbeitungsvorrichtung kann vorzugsweise dazu ausgebildet sein, insbesondere zu (vor-)bestimmten Zeitpunkten während des Ablaufs einer Aktion des Industrieroboters, diejenigen Datenanteile über das unkritische Objekt aus den gewonnenen Abstandsdaten zu filtern, das kritische Objekt in den gefilterten Abstandsdaten zu erkennen, und auf die Erkennung des kritischen Objekts hin den Industrieroboter in einen abgesicherten Steuerungsmodus zu versetzen.

Unter einem unkritischen Objekt kann ein bekannter Gegenstand, ein Tier, eine Person, ein Teil des Industrieroboters, der Industrieroboter selbst, ein Teil der Ladung und/oder die (gesamte) Ladung, ein Teil eines Transportfahrzeugs und/oder das (gesamte) Transportfahrzeug gemeint sein.

Die (Funktion der) Verarbeitungsvorrichtung kann durch den Umgebungssensor selbst, durch die Steuerung des Industrieroboters, als separate Recheneinheit (z.B. Prozessor oder Mikrokontroller) und/oder als Remote-Server bereitgestellt werden.

Die Aktion wird vorzugsweise durch den Industrieroboter teilautonom oder autonom ausgeführt.

Unter einem Datenanteil kann ein Bildpunkt, Pixel, Raumpunkt, Voxel und/oder Winkelsegment des Sichtfelds (d.h. Erfassungsbereich) des Umgebungssensors gemeint sein.

Der Industrieroboter kann beispielsweise in den gesicherten Steuerungsmodus versetzt werden, indem die Verarbeitungsvorrichtung ein entsprechendes Befehlssignal an eine Steuerung des Industrieroboters übersendet. Die Verarbeitungsvorrichtung kann mit dem Industrieroboter, insbesondere der Steuerung des Industrieroboters, verbindbar sein und insbesondere mit dem Industrieroboter in kabelloser oder kabelgebundener (sicherer) Signalverbindung stehen. Die Kommunikation zwischen der Verarbeitungsvorrichtung und dem Industrieroboter kann dabei über ein sicheres Protokoll erfolgen. Alternativ kann die Verarbeitungsvorrichtung ein Teil der Steuerung des Industrieroboters sein oder umgekehrt.

Der Umgebungssensor kann dazu ausgebildet sein, Sendelicht in den Teil des Arbeitsbereichs und/oder der Umgebung des Industrieroboters auszusenden, von dem unkritischen und/oder kritischen Objekt (und auch von anderen Gegenständen) im Arbeitsbereich und/oder in der Umgebung des Industrieroboters remittiertes Sendelicht als Empfangslicht zu empfangen und dabei Abstandsdaten über den Arbeitsbereich und/oder die Umgebung des Industrieroboters zu gewinnen, insbesondere über ein Laufzeitverfahren zu messen. Zusätzlich oder alternativ kann der Umgebungssensor dazu ausgebildet sein, ein hochfrequentes (vorzugsweise moduliertes) elektromagnetisches Sendesignal in den Teil des Arbeitsbereichs und/oder der Umgebung des Industrieroboters auszusenden, von dem unkritischen und/oder kritischen Objekt (und auch von anderen Gegenständen) im Arbeitsbereich und/oder in der Umgebung des Industrieroboters remittierte und z.B. reflektierte Sendeleistung als Echosignal oder Empfangssignal zu empfangen und dabei Abstandsdaten (die vorzugsweise auch Geschwindigkeitswerte umfassen) über den Arbeitsbereich und/oder die Umgebung des Industrieroboters zu gewinnen, insbesondere mittels Registrierung einer Frequenzverschiebung und/oder Änderung der Phasenlage zu messen.

Es versteht sich, dass, auch wenn hierin nur von einem Umgebungssensor die Rede ist, auch mehrere Umgebungssensoren gemeint sein können. Das System kann also nicht nur einen Umgebungssensor, sondern auch zwei, drei, vier, fünf oder mehr Umgebungssensoren umfassen. Die Umgebungssensoren können so angeordnet sein, dass sich ihre Sichtfelder überlappen. Auf diese Weise kann eine Redundanz bereitgestellt und/oder Blindzonen vermieden werden.

In dem Umgebungssensor kann ein (dreidimensionales) Warn- oder Schutzfeld konfiguriert sein, bei dessen Verletzung ein Warnsignal ausgegeben und/oder der Industrieroboter in den abgesicherten Steuerungsmodus versetzt werden kann. Das Schutzfeld kann gegenüber dem gesamten Sichtfeld des Umgebungssensors eingeschränkt sein, wobei mit dem Sichtfeld der gesamte Erfassungsbereich des Umgebungssensors gemeint sein kann. Das in dem Umgebungssensor konfigurierte Schutzfeld kann vorzugsweise während des Betriebs dynamisch gewechselt werden, um flexibel auf verschiedene unkritische Objekte (z.B. Container oder Transportfahrzeuge) reagieren zu können.

Gemäß einer Ausführungsform sind (für Erkennung der Datenanteile über das unkritische Objekt und/oder die Bearbeitung der gewonnen Abstandsdaten anhand der erkannten Datenanteile über das unkritische Objekt, insbesondere für die Ausfilterung der Datenanteile über das unkritische Objekt) die Datenanteile über das unkritische Objekt zu den bestimmten Zeitpunkten während des Ablaufs der Aktion des Industrieroboters vorbekannt.

Beispielsweise kann insbesondere bei einer autonomen Aktion des Industrieroboters (z.B. Verladung von Containern) davon auszugehen sein, dass der Bewegungsablauf des Industrieroboters (z.B. Krans) bei jeder Wiederholung der Aktion nahezu identisch ablaufen wird. Auch kann z.B. bei autonom agierenden Transportfahrzeugen davon ausgegangen werden, dass sich das Transportfahrzeug während der Aktion (z.B. Verladevorgang) immer an einer vorhersehbaren Position befindet und/oder dass das unkritische (erwartete) Objekt immer dieselbe Größe haben wird. Das Schutzfeld des Umgebungssensors kann daher erwartungsgemäß durch das unkritische Objekt (z.B. einen Teil des Industrieroboters, den Boden, das Transportfahrzug und/oder den Container) zu bestimmten Zeitpunkten während des Ablaufs der Aktion des Industrieroboters verletzt werden bzw. das unkritische Objekt kann erwartungsgemäß in den gewonnenen Abstandsdaten zu den bestimmten Zeitpunkten während des Ablaufs der Aktion erkennbar sein. Durch die Erkennung der bekannten Datenanteile über das unkritische Objekt und die Bearbeitung der gewonnen Abstandsdaten anhand der erkannten Datenanteile über das unkritische Objekt kann eine unerwünschte Objekterkennung durch den Umgebungssensor und infolgedessen eine, in diesem Fall, unerwünschte Versetzung des Industrieroboters in den abgesicherten Steuerungsmodus vermieden werden. In anderen Worten kann ein dynamisches oder veränderbares Schutzfeld des Umgebungssensors realisiert werden, in dem vorzugsweise alle Datenanteile über unkritische (erwartete) Objekte während des Ablaufs der Aktion des Industrieroboters aus dem Sichtfeld (d.h. Erfassungsbereich) des Umgebungssensors ausgeschnitten und/oder gefiltert werden und infolgedessen bei der weiteren Datenverarbeitung (d.h. bei der Erkennung des kritischen Objekts) unberücksichtigt bleiben und/oder ignoriert werden.

Die Datenanteile über das unkritische Objekt können beispielsweise durch Kalibration und/oder Einlernen des Systems auf den Ablauf der Aktion des Industrieroboters vorbekannt sein. Mit dem verwendeten Umgebungssensor können als Kalibration beispielsweise Abstandsdaten zu bestimmten Zeitpunkten (z.B. alle 50 Millisekunden) während einer typischen Aktion (z.B. eines typischen Verladevorgangs) aufgenommen werden. Bei dieser Kalibration dürfen sich dann nur die unkritischen (erwarteten) Objekte (und insbesondere keine unerwarteten Objekte wie Z.B. Personen) im Erfassungsbereich des Umgebungssensors befinden. Mit einem Encoder kann der Start des Ablaufs der Aktion mit allen vorhandenen Umgebungssensoren synchronisiert werden. Zu jedem Zeitpunkt bzw. bei jeder Aufnahme werden von den Umgebungssensoren bestimmte Datenanteile, z.B. Raumpunkte oder Voxel, über das unkritische (erwartete) Objekt an spezifischen Positionen im Überwachungsbereich (d.h. in dem Teil des Arbeitsbereichs und/oder Umgebung des Industrieroboters) erfasst. Die Zeitpunkte (z.B. alle 50 Millisekunden) können den zugehörigen Aufnahmen von Abstandsdaten mittels des Encoders zur Erfassung der Bewegung des Industrieroboters zugeordnet werden. Nach der Kalibration kann das System zu jedem Zeitpunkt während des Ablaufs der Aktion und dementsprechend für jede Aufnahme von Abstandsdaten auf eine zu erwartende Objekterkennung in Form von bekannten Datenanteilen (z.B. Raumpunkten, Voxel und/oder Abstandswerten für jedes Winkelsegment jedes vorhandenen Umgebungssensors) zurückgreifen. Die bekannten Datenanteile über das unkritische Objekt können dann aus den gewonnen Abstandsdaten (z.B. der aufgenommen Punktewolke der 3D-Umgebungssensoren) zu jedem Zeitpunkt während des Ablaufs der Aktion bzw. in jeder Aufnahme erkannt, insbesondere bestimmt, markiert, herausgefiltert, ausgeschnitten, herausgerechnet, extrahiert und/oder entfernt werden, sodass diese Datenanteile über das unkritische Objekt in der späteren Überwachung, also bei der Erkennung des kritischen Objekts, unberücksichtigt bleiben und/oder ignoriert werden können.

Mittels einer Fall-Unterscheidung mit separaten Kalibrationen und/oder hinterlegten Daten können Variationen in der Aktion (z.B. im Verladevorgang), wie beispielsweise unterschiedliche Größen des unkritischen Objekts (z.B. unterschiedliche Größen der Container und/oder Transportfahrzeuge), berücksichtigt werden. Die Fall-Unterscheidung kann beispielsweise anhand eines Eingabeparameters an die Verarbeitungsvorrichtung erfolgen. Zusätzlich oder alternativ kann eine Fall-Unterscheidung anhand einer Größen-Klassifizierung des unkritischen Objekts mittels des Umgebungssensors erfolgen.

Gemäß einer Ausführungsform umfasst das System zumindest einen Encoder zur Erkennung und Bestimmung der Bewegung des Industrieroboters und/oder des unkritischen Objekts, wobei der Encoder vorzugsweise dazu ausgebildet ist, den Start des Ablaufs der Aktion des Industrieroboters, die bestimmten Zeitpunkte (insbesondere in regelmäßigen Zeitabständen und/oder periodisch) während des Ablaufs der Aktion des Industrieroboters und/oder das Ende des Ablaufs der Aktion des Industrieroboters mit allen (vorhandenen) Umgebungssensoren zu synchronisieren.

Der Encoder kann Teil der Verarbeitungsvorrichtung, des Industrieroboters und/oder des unkritischen Objekts sein. Der Encoder kann mit der Verarbeitungsvorrichtung, dem Industrieroboter, dem unkritischen Objekt und/oder dem Umgebungssensor in (kabelloser oder kabelgebundener) Signalverbindung stehen.

Gemäß einer Ausführungsform ist die Verarbeitungsvorrichtung dazu ausgebildet, die Datenanteile über das unkritische Objekt anhand eines erwarteten Abstands, anhand einer erwarteten Position, anhand einer erwarteten Bewegungsgeschwindigkeit, anhand einer erwarteten Bewegungsrichtung, anhand einer erwarteten Größe und/oder anhand einer erwarteten Intensität des unkritischen Objekts (insbesondere zu den bestimmten Zeitpunkten während des Ablaufs der Aktion des Industrieroboters) zu erkennen, insbesondere aus den gewonnenen Abstandsdaten zu filtern.

Gemäß einer Ausführungsform wird die erwartete Position, Bewegungsgeschwindigkeit und/oder Bewegungsrichtung des unkritischen Objekts zumindest anhand von mittels des Encoders erfassten Daten bestimmt.

In anderen Worten kann die Erkennung, insbesondere Bestimmung, der (zu filternden) Datenanteile über das unkritische Objekt (z.B. aus den Kalibrations-Daten) anhand von Erwartungswerten erfolgen. Der Erwartungswert der Datenanteile (z.B. Raumpunkte oder Abstandswerte für jedes Winkelsegment der 3D-Umgebungssensoren) ist beispielsweise unendlich (also keine Objekte im Sichtfeld) oder der entsprechende erwartete Abstandswert des Bodens. Bei der Kalibration können die Abstandswerte zu bestimmten Zeitpunkten von diesem Erwartungswert um einen Mindestwert abweichen (z.B. mehr als 50 cm Abweichung), wobei nur kürzere Abstände als die Referenz berücksichtigt werden. Die abweichenden Datenanteile (z.B. Raumpunkte oder Winkelsegmente mit abweichendem Abstand zur Referenz, z.B. dem Boden) werden dann als Datenanteile über das unkritische Objekt erkannt und für die Bearbeitung der gewonnenen Abstandsdaten herangezogen, insbesondere aus den gewonnenen Abstandsdaten herausgefiltert.

Als weiteres Beispiel kann die Bewegung des unkritischen Objekts und/oder des Industrieroboters mittels dem (oder der) Encoder erfasst und an die Verarbeitungsvorrichtung weitergegeben werden, sodass die erwartete Position, Bewegungsgeschwindigkeit und/oder Bewegungsrichtung des unkritischen Objekts (z.B. der Fracht, insbesondere eines Containers) von der Verarbeitungsvorrichtung bestimmt werden kann. Diese Position, Bewegungsgeschwindigkeit und/oder Bewegungsrichtung des unkritischen Objekts (und bevorzugt auch eine bekannte Größe des unkritischen Objekts) kann von der Verarbeitungsvorrichtung genutzt werden, um im Überwachungsbereich des Umgebungssensors die entsprechenden Datenanteile, z.B. Raumpunkte oder Voxel, über das (erwartete) unkritische Objekt erkennen zu können und bei der weiteren Datenverarbeitung ignorieren (insbesondere filtern oder ausschneiden) zu können. In anderen Worten wird das Schutzfeld bzw. der Überwachungsbereich der Sensoren (zusätzlich oder alternativ zu einer Kalibration des Ablaufs der Aktion mittels des Umgebungssensors) anhand des erfassten Encoder-Signals dynamisch angepasst. Dies kann im Vergleich zur (alleinigen) Kalibration mittels des Umgebungssensors eine höhere Flexibilität bereitstellen und beispielsweise besonders für manuell gesteuerte Aktionen des Industrieroboters (z.B. Containerverladungen durch einen Kranführer) geeignet sein.

Gemäß einer Ausführungsform umfassen die Abstandsdaten (insbesondere für jeden Raumpunkt, jeden Voxel oder jedes Winkelsegment des Umgebungssensors) Abstandswerte (relativ zu dem Umgebungssensor gesehen) und/oder Intensitätswerte, wobei die Abstandsdaten vorzugsweise zusätzlich (bevorzugt mittels Frequency Modulated Continuous Wave, FMCW, Verfahren gemessene radiale) Geschwindigkeitswerte umfassen. Der Umgebungssensor kann eine 3D-Punktewolke und/oder Abstands- bzw. Tiefenkarte des Überwachungsbereichs mit ortsaufgelösten diskreten Raumpunkten oder Voxel für jedes Winkelsegment des Sensors liefern (was sowohl für einen Radar- als auch einen LiDAR-Sensor gelten kann), wobei jeder Raumpunkt oder Voxel jeweils eine Information über mindestens die Intensität und, wenn mittels FMCW-Verfahren gemessen wird, zusätzlich eine Information über die (radiale) Geschwindigkeit umfassen kann. Die Winkelsegmente eines Radar-Sensors (typischerweise 10° Winkelauflösung) sind in der Regel deutlich größer als die eines LiDAR-Sensors (typischerweise 0,1 bis 1° Winkelauflösung).

Gemäß einer Ausführungsform ist die Verarbeitungsvorrichtung dazu ausgebildet, bei der Erkennung (und Ausfilterung) der Datenanteile über das unkritische Objekt nur die Abstandswerte in den gewonnen Abstandsdaten zu berücksichtigen. In anderen Worten werden beispielsweise nur die Abstandswerte bei der Objekterkennung in der Kalibration berücksichtigt. Auf diese Weise kann der Aufwand in der Datenprozessierung verringert werden. Alternativ ist die Verarbeitungsvorrichtung dazu ausgebildet, bei der Erkennung (und Ausfilterung) der Datenanteile über das unkritische Objekt die Abstandswerde, die Intensitätswerte und die Geschwindigkeitswerte in den gewonnen Abstandsdaten zu berücksichtigen. Auf diese Weise kann die Genauigkeit der Erkennung erhöht werden.

Gemäß einer Ausführungsform stehen die Verarbeitungsvorrichtung und der Umgebungssensor miteinander in einer sicheren Signalverbindung, wobei der Umgebungssensor vorzugsweise ein sicheres Signal mit den Abstandsdaten mittels eines sicheren Sendeprotokolls an die Verarbeitungsvorrichtung sendet. Auf diese Weise kann eine besonders sichere Messdatenausgabe gewährleistet werden.

Gemäß einer Ausführungsform ist der Umgebungssensor als Sicherheitssensor ausgebildet.

Gemäß einer Ausführungsform ist die Verarbeitungsvorrichtung dazu ausgebildet, eine Position (z.B. eine absolute Position in einem globalen Koordinatensystem), einen Abstand (relativ zu dem Umgebungssensor), eine Größe (z.B. bemessen als Anzahl an zusammenhängender Raumpunkte, Voxel und/oder Winkelsegmente), eine Bewegungsrichtung, eine Bewegungsgeschwindigkeit, und/oder eine Intensität des kritischen Objekts anhand der bearbeiteten (insbesondere gefilterten) Abstandsdaten zu bestimmen, und das kritische Objekt anhand seiner bestimmten Position, seines bestimmten Abstands, seiner bestimmten Größe, seiner bestimmten Bewegungsrichtung, seiner bestimmten Bewegungsgeschwindigkeit und/oder seiner bestimmten Intensität zu erkennen, wobei die Verarbeitungsvorrichtung vorzugsweise dazu ausgebildet ist, das kritische Objekt in Abhängigkeit von seinem bestimmten Abstand und/oder seiner bestimmten Größe zu erkennen.

Gemäß einer Ausführungsform ist die Verarbeitungsvorrichtung dazu ausgebildet, anhand der bearbeiteten (insbesondere gefilterten) Abstandsdaten die Größe und den Abstand des kritischen Objekts zu bestimmen und das kritische Objekt daran zu erkennen, dass seine bestimmte Größe in Abhängigkeit von seinem bestimmten Abstand gleich oder größer als ein erster Größengrenzwert ist und gleich oder kleiner als ein zweiter Größengrenzwert ist.

In anderen Worten kann die Erkennung des kritischen Objekts beispielsweise basierend auf einer Unterscheidung zwischen Objekten in der Größenordnung einer Person zu anderen Objekten deutlich kleinerer Größe (z.B. Partikel, Insekten, etc.) oder deutlich größerer Größe (z.B. LKW, Container, etc.) anhand einer Größenbewertung der mittels des (3D-)Umgebungssensors gewonnenen und bearbeiteten Abstandsdaten erfolgen. Diese Unterscheidung kann anhand einer Volumen- oder Oberflächenbewertung erfolgen. Beispielsweise kann die Anzahl zusammenhängender bzw. angrenzender Raumpunkte oder Voxel über das kritische Objekt (bevorzugt nach einer Erosions- oder Dilatations-Operation) in Abhängigkeit des Abstands mit Größengrenzwerten verglichen werten, um verschiedene Objektgrößen zu unterscheiden. Dabei können Größengrenzwerte verschiedener Größenordnungen verwendet werden. Der erste Größengrenzwert kann beispielswiese so gewählt werden, dass er eine besonders kleine Objekt-Größenordnung (wie z.B. Partikel, Insekten, etc.) wiederspiegelt. Der erste Größengrenzwert kann beispielsweise als Anzahl von 10 zusammenhängender Raumpunkte oder Voxel bei einem Abstand von 10 Meter (relativ zu dem Umgebungssensor) gewählt werden. Der zweite Größengrenzwert kann beispielswiese so gewählt werden, dass er eine besonders große Objekt-Größenordnung (z.B. Transportfahrzeuge oder LKWs, Container, etc.) wiederspiegelt. Der zweite Größengrenzwert kann beispielsweise als Anzahl von 1000 zusammenhängender Raumpunkte oder Voxel bei einem Abstand von 10 Meter gewählt werden. Auf diese Weise kann das kritische Objekt erkannt werden, dessen Größe z.B. in der Größenordnung von Personen und ähnlich großen Objekten liegen kann und dessen typische Größe als Anzahl von 10 bis 1000 zusammenhängender Raumpunkte oder Voxel bei 10 Meter Abstand bemessen werden kann.

Gemäß einer Ausführungsform umfasst der abgesicherte Steuerungsmodus ein Absenken einer Bewegungsgeschwindigkeit des Industrieroboters, eine Verlangsamung des Industrieroboters, ein Verfahren des Industrieroboters in eine Halteposition, eine Änderung der Bewegungsrichtung des Industrieroboters, eine Änderung einer Route des Industrieroboters, eine Stilllegung des Industrieroboters, ein Stoppen der Bewegung des Industrieroboters, eine Umleitung des Industrieroboters, eine Änderung eines Bewegungsablaufs des Industrieroboters, und/oder eine Änderung einer von dem Industrieroboter ausgeführten Aktion.

Gemäß einer Ausführungsform wird der abgesicherte Steuerungsmodus in Abhängigkeit von der bestimmten Position des kritischen Objekts gewählt. Beispielsweise kann die Bewegungsgeschwindigkeit des Industrieroboters umso stärker abgesenkt werden je näher das kritische Objekt zu dem unkritischen Objekt ist. Als weiteres Beispiel kann, in Abhängigkeit von der Nähe des kritischen Objekts zu dem unkritischen Objekt, eine Verlangsamung des Industrieroboters in ein Stoppen der Bewegung des Industrieroboters übergehen. Als weiteres Beispiel können mehrere Detektionszonen um das unkritische Objekt (z.B. Transportfahrzeug) herum definiert sein. Die verschiedenen Detektionszonen können sich darin unterscheiden, dass je nach Detektionszone bei Erkennung des kritischen Objekts in der jeweiligen Detektionszone eine unterschiedliche Reaktion des Industrieroboters bewirkt wird, z.B. eine Verlangsamung unterschiedlicher Grade oder ein Stoppen des Industrieroboters. Beispielsweise kann, wenn das kritische Objekt in einer Detektionszone unmittelbar um das unkritische Objekt herum erkannt wird, ein Maschinenstopp ausgelöst werden, wohingegen die Erkennung des kritischen Objekts in einer Detektionszone im weiteren Umfeld des unkritischen Objekts eine Verlangsamung der Bewegung des Industrieroboters auslöst.

Gemäß einer Ausführungsform umfasst das System zumindest einen (3D-)LiDAR-Sensor, wobei der LiDAR -Sensor (und insbesondere das Sichtfeld bzw. der Erfassungsbereich des LiDAR-Sensors) vorzugsweise im Wesentlichen zentral von oben auf den Teil des Arbeitsbereichs und/oder der Umgebung des Industrieroboters gerichtet ist. LiDAR-Sensoren können eine hohe Winkelauflösung (typischerweise 0,1 bis 1° Winkelauflösung) aufweisen, wodurch die Sicherheit des Systems erhöht werden kann. In der Draufsicht auf den Teil des Arbeitsbereichs des Industrieroboters kann beispielsweise der Boden dem LiDAR-Sensor als Referenz dienen. Insbesondere kann der Boden als Referenz für eine Diagnose des Systems verwendet werden. Wenn zum Beispiel eine erwartete Kontur des Bodens nicht mehr erkannt wird, kann ein Warnsignal ausgegeben werden.

Zusätzlich oder alternativ umfasst das System zumindest zwei (3D-)Radar-Sensoren, wobei die Radar-Sensoren vorzugsweise von jeweils zwei unterschiedlichen, bevorzugt gegenüberliegenden, Seiten auf den Teil des Arbeitsbereichs und/oder der Umgebung des Industrieroboters gerichtet sind. Die Radar-Sensoren können dazu geeignet sein, eine Bewegung oder Atmung des kritischen Objekts zu erkennen. Zudem können Radar-Sensoren kostengünstig sein und bei schlechten Umgebungsbedingungen (z.B. bei Nebel, Niederschlag und/oder Verschmutzung) zuverlässiger sein (als z.B. LiDAR-Sensoren). Durch die seitliche Anbringung der Radar-Sensoren (im Gegensatz zu frontaler Draufsicht von oben), kann vermieden werden, dass der Boden unerwünschte Artefakte hervorruft. Zudem können die Radar-Sensoren so angebracht werden, dass die Sichtfelder, die Erfassungsbereiche und/oder die Empfangskeulen der Radar-Sensoren überlappen und/oder von zwei unterschiedlichen Seiten auf das unkritische Objekt gerichtet sind. Auf diese Weise kann die Entstehung von Blindzonen (z.B. verursacht durch Abschattung durch das unkritische Objekt) reduziert oder vermieden werden.

Es versteht sich, dass das System sowohl zumindest einen LiDAR-Sensor als auch zumindest einen Radar-Sensor umfassen kann. Auf diese Weise können die Sicherheit und/oder die Effizienz des Systems erhöht werden.

Gemäß einer Ausführungsform ist die Verarbeitungsvorrichtung dazu ausgebildet, die Datenanteile über das unkritische Objekt einschließlich eines Toleranzbereichs um das unkritische Objekt (insbesondere um die bestimmte Position des unkritischen Objekts) in den gewonnenen Abstandsdaten zu erkennen und die gewonnenen Abstandsdaten anhand der erkannten Datenanteile über das unkritische Objekt einschließlich des Toleranzbereichs zu bearbeiten, insbesondere die erkannten Datenanteile über das unkritische Objekt einschließlich des Toleranzbereichs aus den gewonnen Abstandsdaten zu filtern. Der Toleranzbereich kann als Anzahl von Raumpunkten oder Voxel bemessen sein und beispielsweise als Anzahl von Raumpunkten oder Voxel gewählt werden, die einem lateralen und/oder radialen Abstand von dem unkritischen Objekt von 1 Meter entspricht.

Gemäß einer Ausführungsform ist die Verarbeitungsvorrichtung dazu ausgebildet, die Datenanteile über das unkritische Objekt einschließlich eines Toleranzbereichs um das unkritische Objekt aus den gewonnenen Abstandsdaten zu filtern, das kritische Objekt in den gefilterten Abstandsdaten zu erkennen, und auf die Erkennung des kritischen Objekts hin den Industrieroboter in einen abgesicherten Steuerungsmodus zu versetzen.

Gemäß einer Ausführungsform umfasst das System den Industrieroboter.

Weiterer Gegenstand der Erfindung ist eine Verwendung eines hierin beschriebenen Systems zur sicheren Steuerung zumindest eines Industrieroboters, insbesondere eines Krans zum Bewegen von Containern.

Weiterer Gegenstand der Erfindung ist ein Verfahren zur sicheren Steuerung zumindest eines Industrieroboters, insbesondere eines Krans zum Bewegen von Containern, wobei zumindest ein Teil eines Arbeitsbereichs und/oder einer Umgebung des Industrieroboters mittels zumindest eines Umgebungssensors erfasst wird und dabei Abstandsdaten, insbesondere über zumindest ein unkritisches Objekt und/oder über zumindest ein kritisches Objekt in dem Teil des Arbeitsbereichs und/oder der Umgebung des Industrieroboters, gewonnen werden, und wobei, insbesondere zu bestimmten Zeitpunkten während des Ablaufs einer Aktion des Industrieroboters, diejenigen Datenanteile über das unkritische Objekt in den gewonnenen Abstandsdaten erkannt werden, die gewonnenen Abstandsdaten anhand der erkannten Datenanteile über das unkritische Objekt bearbeitet werden, wobei vorzugsweise die erkannten Datenanteile über das unkritische Objekt aus den gewonnen Abstandsdaten gefiltert werden, das kritische Objekt in den bearbeiteten (insbesondere gefilterten) Abstandsdaten erkannt wird, und auf die Erkennung des kritischen Objekts hin der Industrieroboter in einen abgesicherten Steuerungsmodus versetzet wird.

Es versteht sich, dass das bezüglich des erfindungsgemäßen Systems Beschriebene auch für die Verwendung des Systems und das Verfahren gilt. Dies gilt insbesondere für Ausführungsformen und Vorteile. Weiterhin ist es zu verstehen, dass alle hierin offenbarten Merkmale und Ausführungsformen kombiniert werden können, wenn nicht ausdrücklich anders angegeben.

Nachfolgend wird die Erfindung rein beispielhaft anhand möglicher Ausführungsformen unter Bezugnahme auf die beigefügte Zeichnung beschrieben. Es zeigen:
- Fig. 1: eine schematische Darstellung eines Systems zur sicheren Steuerung eines Industrieroboters in Seitenansicht;
- Fig. 2: eine schematische Darstellung eines Systems zur sicheren Steuerung eines Industrieroboters in Seitenansicht;
- Fig. 3: das System aus Fig. 2 in Draufsicht;
- Fig. 4: eine schematische Darstellung eines Systems zur sicheren Steuerung eines Industrieroboters in Seitenansicht;
- Fig. 5: eine schematische Darstellung eines Systems zur sicheren Steuerung eines Industrieroboters in Seitenansicht;

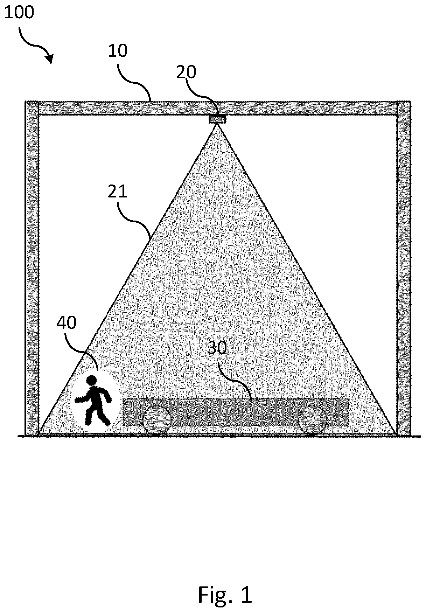

Das in Fig. 1 schematisch dargestellte System 100 zur sicheren Steuerung zumindest eines Industrieroboters 10 umfasst eine Verarbeitungsvorrichtung und zumindest einen Umgebungssensor 20, insbesondere einen (3D-)Radar-Sensor oder einen (3D-)LiDAR-Sensor. Der Industrieroboter 10 kann einen (Portal-)Kran zum Bewegen von Containern umfassen. Die Verarbeitungsvorrichtung kann als separate Einheit (nicht in Fig. 1 gezeigt), durch die Steuerung des Industrieroboters 10 und/oder durch den Umgebungssensor 20 bereitgestellt sein. Der in Fig. 1 gezeigte Umgebungssensor 20 ist dazu ausgebildet, zumindest einen Teil eines Arbeitsbereichs und/oder einer Umgebung des Industrieroboters 10 zu erfassen und dabei Abstandsdaten, insbesondere über zumindest ein unkritisches Objekt 30 und/oder über zumindest ein kritisches Objekt 40 in dem Teil des Arbeitsbereichs und/oder der Umgebung des Industrieroboters 10, zu gewinnen. Wie Fig. 1 dargestellt kann das unkritische Objekt ein Transportfahrzeug 30 umfassen und das kritische Objekt eine Person 40 umfassen. Der Umgebungssensor 20 kann in der Umgebung des Industrieroboters 10 oder an dem Industrieroboter 10 selbst angebracht sein. Wie in Fig. 1 dargestellt kann der Umgebungssensor 20 an dem Portal des Krans 10 angebracht sein.

Die Verarbeitungsvorrichtung ist dazu ausgebildet, insbesondere zu bestimmten Zeitpunkten während des Ablaufs einer Aktion des Industrieroboters 10 (z.B. Verladevorgang), diejenigen Datenanteile über das Transportfahrzeug 30 in den gewonnenen Abstandsdaten zu erkennen und die gewonnenen Abstandsdaten anhand der erkannten Datenanteile über das Transportfahrzeug 30 zu bearbeiten, wobei die erkannten Datenanteile über das Transportfahrzeug 30 vorzugsweise aus den gewonnen Abstandsdaten gefiltert werden. Die Verarbeitungsvorrichtung ist ferner dazu ausgebildet, die Person 40 in den bearbeiteten (insbesondere gefilterten) Abstandsdaten zu erkennen und auf die Erkennung der Person 40 hin den Industrieroboter 10 in einen abgesicherten Steuerungsmodus zu versetzen.

Die Datenanteile über das Transportfahrzeug 30 können, beispielsweise zu bestimmten Zeitpunkten während eines Verladevorgangs eines Containers (nicht in Fig. 1 gezeigt) auf das Transportfahrzeug 30, erkannt werden. Die gewonnenen Abstandsdaten werden dann anhand der erkannten Datenanteile über das Transportfahrzeug 30 bearbeitet, wobei die erkannten Datenanteile über das Transportfahrzeug 30 vorzugsweise aus den gewonnenen Abstandsdaten gefiltert werden, sodass die Datenanteile über das Transportfahrzeug 30 bei der Erkennung der Person 40 unberücksichtigt bleiben und/oder ignoriert werden können. Auf diese Weise kann die Person 40 mit größerer Sicherheit und/oder Effizienz erkannt und eine sichere und/oder effiziente Steuerung des Industrieroboters 10 realisiert werden.

Der Umgebungssensor in Fig. 1 kann bevorzugt ein (3D-)LiDAR-Sensor 20 sein, wobei der LiDAR-Sensor 20, und insbesondere das Sichtfeld 21 des LiDAR-Sensors 20, wie in Fig. 1 gezeigt im Wesentlichen zentral von oben auf den Teil des Arbeitsbereichs und/oder der Umgebung des Industrieroboters 10 gerichtet sein kann. Auf diese Weise kann der Boden (unter dem Arbeitsbereich des Industrieroboters 10 bzw. der Boden, auf dem sich der Industrieroboter 10 bewegt) dem LiDAR-Sensor 20, insbesondere für Diagnosezwecke und/oder für die Objekterkennung, als Referenz dienen.

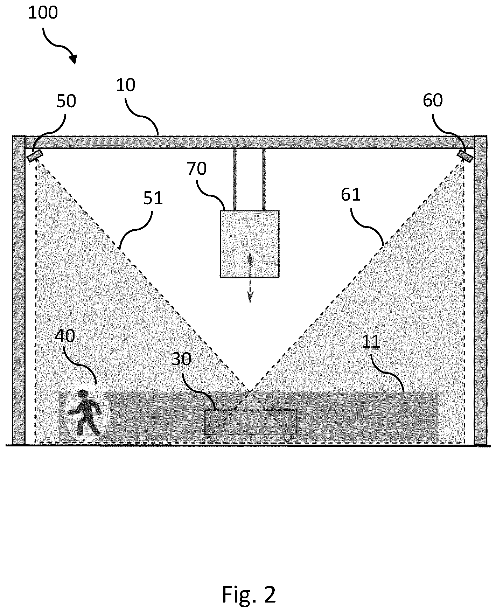

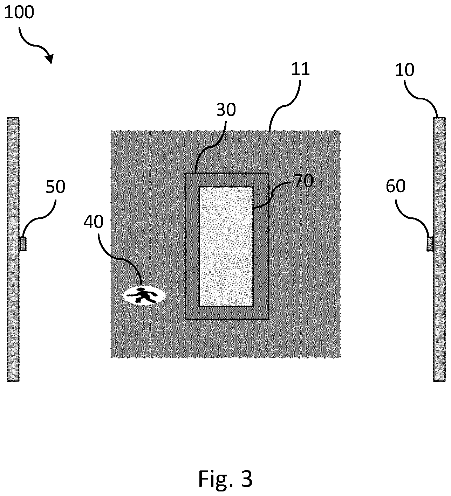

Fig. 2 zeigt eine schematische Darstellung eines weiteren Systems 100 zur sicheren Steuerung eines Industrieroboters 10. Fig. 3 zeigt eine Draufsicht des Systems 100 aus Fig. 2.

Das in Fig. 2 und Fig. 3 dargestellte System 100 kann ähnliche oder die gleichen Komponenten wie das in Fig. 1 gezeigte System umfassen. Zusätzlich oder alternativ umfasst das System 100, wie in Fig. 2 und Fig. 3 dargestellt, zumindest zwei Radar-Sensoren 50, 60 als Umgebungssensoren, wobei die Radar-Sensoren 50, 60 von jeweils zwei unterschiedlichen, vorzugsweise gegenüberliegenden, Seiten auf den Teil des Arbeitsbereichs und/oder der Umgebung 11 des Industrieroboters 10 gerichtet sind, um den Teil des Arbeitsbereichs und/oder der Umgebung 11 zu erfassen und dabei Abstandsdaten, insbesondere über zumindest ein unkritisches Objekt, wie hier in Fig. 2 dargestellt ein Transportfahrzeug 30 und/oder ein Container 70, und/oder zumindest ein kritisches Objekt, wie hier eine Person 40, zu gewinnen. Durch die seitliche Anbringung der Radar-Sensoren 50, 60 kann vermieden werden, dass der Boden unerwünschte Artefakte hervorruft. Zudem können die Radar-Sensoren 50, 60 so in der Umgebung und/oder an dem Portal des Krans 10 angebracht werden, dass die Sichtfelder 51, 61 der Radar-Sensoren 50, 60 überlappen und/oder von zwei unterschiedlichen Seiten (und bevorzugt gegenüberliegenden Seiten, wie in Fig. 2 und 3 gezeigt) auf das Transportfahrzeug 30 gerichtet sind. Auf diese Weise können Blindzonen (z.B. verursacht durch Abschattung durch das Transportfahrzeug 30) reduziert oder vermieden werden.

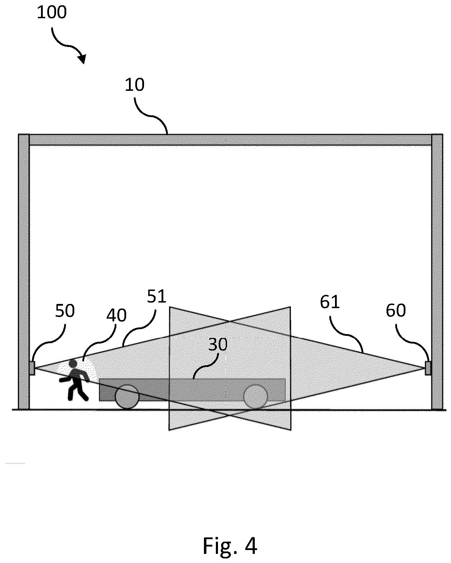

Fig. 4 zeigt eine schematische Darstellung eines weiteren Systems 100 zur sicheren Steuerung eines Industrieroboters 10. Das in Fig. 4 dargestellte System 100 kann ähnliche oder die gleichen Komponenten wie das in Fig. 2 gezeigte System umfassen. Im Gegensatz zu dem in Fig. 2 gezeigten System sind die Umgebungssensoren 50, 60 in Fig. 4 nicht seitlich von oben auf den Teil des Arbeitsbereichs und/oder der Umgebung 11 des Industrieroboters 10 gerichtet (also nicht oben an dem Portal des Krans 10 angebracht), sondern seitlich auf einer niedrigeren Höhe an den Kranbeinen des Krans 10 angebracht, sodass das Transportfahrzeug 30 und/oder die Person 40 im Wesentlichen frontal von jeweils einer Seite erfasst werden können.

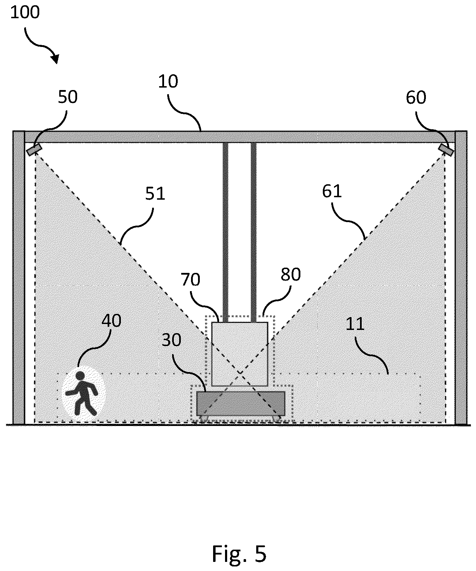

Fig. 5 zeigt eine schematische Darstellung eines weiteren Systems 100 zur sicheren Steuerung eines Industrieroboters 10. Das in Fig. 5 dargestellte System 100 kann ähnliche oder die gleichen Komponenten wie das in Fig. 2 gezeigte System umfassen. Die Verarbeitungsvorrichtung des in Fig. 5 dargestellten Systems 100 kann dazu ausgebildet sein, die Datenanteile über das Transportfahrzeug 30 und/oder den Container 70 einschließlich eines Toleranzbereichs 80 um das Transportfahrzeug 30 und/oder den Container 70 aus den gewonnenen Abstandsdaten zu filtern, die Person 40 in den gefilterten Abstandsdaten zu erkennen, und auf die Erkennung der Person hin den Industrieroboter 10 in einen abgesicherten Steuerungsmodus zu versetzen.

Auch wenn in Fig. 1 bis Fig. 5 nur ein Umgebungssensor 20 beziehungsweise zwei Umgebungssensoren 50, 60 gezeigt sind, versteht sich, dass die Systeme auch mehr als einen beziehungsweise mehr als zwei Umgebungssensoren, also beispielsweise drei, vier, fünf oder mehr Umgebungssensoren, umfassen können. Die in Fig. 1 bis Fig. 5 dargestellten Systeme können jeweils zumindest einen Encoder (nicht in Fig. 1 bis Fig. 5 gezeigt) zur Erkennung und Bestimmung der Bewegung des Industrieroboters 10 und/oder des unkritischen Objekts 30, 70 umfassen, wobei der Encoder vorzugsweise dazu ausgebildet ist, den Start des Ablaufs der Aktion des Industrieroboters 10, die bestimmten Zeitpunkte (insbesondere in regelmäßigen Zeitabständen und/oder periodisch) während des Ablaufs der Aktion des Industrieroboters 10 und/oder das Ende des Ablaufs der Aktion des Industrieroboters 10 mit allen (vorhandenen) Umgebungssensoren 20, 50, 60 zu synchronisieren.

### Bezugszeichenliste

- 10: Industrieroboter
- 20: LiDAR-Sensor
- 30: Transportfahrzeug
- 40: Person
- 50: Radar-Sensor
- 60: Radar-Sensor
- 70: Container
- 80: Toleranzbereich
- 100: System

## Patentansprüche

1. System (100) zur sicheren Steuerung zumindest eines Industrieroboters (10), insbesondere eines Krans zum Bewegen von Containern, umfassend eine Verarbeitungsvorrichtung und zumindest einen Umgebungssensor (20, 50, 60), insbesondere einen Radar-Sensor (50, 60) oder einen LiDAR-Sensor (20),
wobei der Umgebungssensor (20, 50, 60) dazu ausgebildet ist, zumindest einen Teil eines Arbeitsbereichs und/oder einer Umgebung (11) des Industrieroboters (10) zu erfassen und dabei Abstandsdaten, insbesondere über zumindest ein unkritisches Objekt (30, 70) und/oder über zumindest ein kritisches Objekt (40) in dem Teil des Arbeitsbereichs und/oder der Umgebung (11) des Industrieroboters (10), zu gewinnen,
wobei die Verarbeitungsvorrichtung dazu ausgebildet ist, insbesondere zu bestimmten Zeitpunkten während des Ablaufs einer Aktion des Industrieroboters (10),
diejenigen Datenanteile über das unkritische Objekt (30, 70) in den gewonnenen Abstandsdaten zu erkennen,
die gewonnenen Abstandsdaten anhand der erkannten Datenanteile über das unkritische Objekt (30, 70) zu bearbeiten,
das kritische Objekt (40) in den bearbeiteten Abstandsdaten zu erkennen, und
auf die Erkennung des kritischen Objekts (40) hin den Industrieroboter (10) in einen abgesicherten Steuerungsmodus zu versetzen.

2. System (100) nach Anspruch 1, wobei die Datenanteile über das unkritische Objekt (30, 70) zu den bestimmten Zeitpunkten während des Ablaufs der Aktion des Industrieroboters (10) vorbekannt sind.

3. System (100) nach Anspruch 1 oder 2,
wobei das System (100) zumindest einen Encoder zur Erkennung und Bestimmung der Bewegung des Industrieroboters (10) und/oder des unkritischen Objekts (30, 70) umfasst,
wobei der Encoder vorzugsweise dazu ausgebildet ist, den Start des Ablaufs der Aktion des Industrieroboters (10), die bestimmten Zeitpunkte während des Ablaufs der Aktion des Industrieroboters (10) und/oder das Ende des Ablaufs der Aktion des Industrieroboters (10) mit allen Umgebungssensoren (20, 50, 60) zu synchronisieren.

4. System (100) nach einem der voranstehenden Ansprüche, wobei die Verarbeitungsvorrichtung dazu ausgebildet ist, die Datenanteile über das unkritische Objekt (30, 70) anhand eines erwarteten Abstands, anhand einer erwarteten Position, anhand einer erwarteten Bewegungsgeschwindigkeit, anhand einer erwarteten Bewegungsrichtung, anhand einer erwarteten Größe und/oder anhand einer erwarteten Intensität des unkritischen Objekts (30, 70) zu erkennen.

5. System (100) nach Anspruch 3 und 4, wobei die erwartete Position, Bewegungsgeschwindigkeit und/oder Bewegungsrichtung des unkritischen Objekts (30, 70) zumindest anhand von mittels des Encoders erfassten Daten bestimmt wird.

6. System (100) nach einem der voranstehenden Ansprüche, wobei die Abstandsdaten Abstandswerte und/oder Intensitätswerte umfassen, wobei die Abstandsdaten vorzugsweise zusätzlich Geschwindigkeitswerte umfassen,
wobei die Verarbeitungsvorrichtung vorzugsweise dazu ausgebildet ist,
bei der Erkennung der Datenanteile über das unkritische Objekt (30, 70) nur die Abstandswerte in den gewonnen Abstandsdaten zu berücksichtigen, oder
bei der Erkennung der Datenanteile über das unkritische Objekt (30, 70) die Abstandswerde, die Intensitätswerte und die Geschwindigkeitswerte in den gewonnen Abstandsdaten zu berücksichtigen.

7. System (100) nach einem der voranstehenden Ansprüche, wobei die Verarbeitungsvorrichtung und der Umgebungssensor (20, 50, 60) miteinander in einer sicheren Signalverbindung stehen, wobei der Umgebungssensor (20, 50, 60) vorzugsweise ein sicheres Signal mit den Abstandsdaten mittels eines sicheren Sendeprotokolls an die Verarbeitungsvorrichtung sendet.

8. System (100) nach einem der voranstehenden Ansprüche, wobei der Umgebungssensor (20, 50, 60) als Sicherheitssensor ausgebildet ist.

9. System (100) nach einem der voranstehenden Ansprüche, wobei die Verarbeitungsvorrichtung dazu ausgebildet ist,
eine Position, einen Abstand, eine Größe, eine Bewegungsrichtung, eine Bewegungsgeschwindigkeit, und/oder eine Intensität des kritischen Objekts (40) anhand der bearbeiteten Abstandsdaten zu bestimmen, und das kritische Objekt (40) anhand seiner bestimmten Position, seines bestimmten Abstands, seiner bestimmten Größe, seiner bestimmten Bewegungsrichtung, seiner bestimmten Bewegungsgeschwindigkeit, und/oder seiner bestimmten Intensität zu erkennen,
wobei die Verarbeitungsvorrichtung vorzugsweise dazu ausgebildet ist, das kritische Objekt (40) in Abhängigkeit von seinem bestimmten Abstand und/oder seiner bestimmten Größe zu erkennen.

10. System (100) nach einem der voranstehenden Ansprüche, wobei die Verarbeitungsvorrichtung dazu ausgebildet ist, anhand der bearbeiteten Abstandsdaten die Größe und den Abstand des kritischen Objekts (40) zu bestimmen und das kritische Objekt (40) daran zu erkennen, dass seine bestimmte Größe in Abhängigkeit von seinem bestimmten Abstand gleich oder größer als ein erster Größengrenzwert ist und gleich oder kleiner als ein zweiter Größengrenzwert ist.

11. System (100) nach einem der voranstehenden Ansprüche,
wobei der abgesicherte Steuerungsmodus ein Absenken einer Bewegungsgeschwindigkeit des Industrieroboters (10), eine Verlangsamung des Industrieroboters (10), ein Verfahren des Industrieroboters (10) in eine Halteposition, eine Änderung der Bewegungsrichtung des Industrieroboters (10), eine Änderung einer Route des Industrieroboters (10), eine Stilllegung des Industrieroboters (10), ein Stoppen der Bewegung des Industrieroboters (10), eine Umleitung des Industrieroboters (10), eine Änderung eines Bewegungsablaufs des Industrieroboters (10), und/oder eine Änderung einer von dem Industrieroboter (10) ausgeführten Aktion umfasst,
wobei der abgesicherte Steuerungsmodus vorzugsweise in Abhängigkeit von der bestimmten Position des kritischen Objekts (40) gewählt wird.

12. System (100) nach einem der voranstehenden Ansprüche,
wobei das System (100) zumindest einen LiDAR-Sensor (20) umfasst, wobei der LiDAR-Sensor (20) vorzugsweise im Wesentlichen zentral von oben auf den Teil des Arbeitsbereichs und/oder der Umgebung (11) des Industrieroboters (10) gerichtet ist; und/oder
wobei das System (100) zumindest zwei Radar-Sensoren (50, 60) umfasst, wobei die Radar-Sensoren (50, 60) vorzugsweise von jeweils zwei unterschiedlichen, bevorzugt gegenüberliegenden, Seiten auf den Teil des Arbeitsbereichs und/oder der Umgebung (11) des Industrieroboters (10) gerichtet sind.

13. System (100) nach einem der voranstehenden Ansprüche, wobei die Verarbeitungsvorrichtung dazu ausgebildet ist, die Datenanteile über das unkritische Objekt (30, 70) einschließlich eines Toleranzbereichs (80) um das unkritische Objekt (30, 70) in den gewonnenen Abstandsdaten zu erkennen und die gewonnenen Abstandsdaten anhand der erkannten Datenanteile über das unkritische Objekt (30, 70) einschließlich des Toleranzbereichs (80) zu bearbeiten.

14. Verwendung eines Systems (100) nach einem der voranstehenden Ansprüche zur sicheren Steuerung zumindest eines Industrieroboters (10), insbesondere eines Krans zum Bewegen von Containern.

15. Verfahren zur sicheren Steuerung zumindest eines Industrieroboters (10), insbesondere eines Krans zum Bewegen von Containern,
wobei zumindest ein Teil eines Arbeitsbereichs und/oder einer Umgebung (11) des Industrieroboters (10) mittels zumindest eines Umgebungssensors (20, 50, 60) erfasst wird und dabei Abstandsdaten, insbesondere über zumindest ein unkritisches Objekt (30, 70) und/oder über zumindest ein kritisches Objekt (40) in dem Teil des Arbeitsbereichs und/oder der Umgebung (11) des Industrieroboters (10), gewonnen werden, und wobei, insbesondere zu bestimmten Zeitpunkten während des Ablaufs einer Aktion des Industrieroboters (10),
diejenigen Datenanteile über das unkritische Objekt (30, 70) in den gewonnenen Abstandsdaten erkannt werden,
die gewonnenen Abstandsdaten anhand der erkannten Datenanteile über das unkritische Objekt (30, 70) bearbeitet werden,
das kritische Objekt (40) in den bearbeiteten Abstandsdaten erkannt wird, und
auf die Erkennung des kritischen Objekts (40) hin der Industrieroboter (10) in einen abgesicherten Steuerungsmodus versetzet wird.

## Geänderte Patentansprüche

### Geänderte Patentansprüche gemäss Regel 137(2) EPÜ.

1. System (100) zur sicheren Steuerung zumindest eines Industrieroboters (10), insbesondere eines Krans zum Bewegen von Containern, umfassend eine Verarbeitungsvorrichtung und zumindest einen Umgebungssensor (20, 50, 60), insbesondere einen Radar-Sensor (50, 60) oder einen LiDAR-Sensor (20),
wobei der Umgebungssensor (20, 50, 60) dazu ausgebildet ist, zumindest einen Teil eines Arbeitsbereichs und/oder einer Umgebung (11) des Industrieroboters (10) zu erfassen und dabei Abstandsdaten über zumindest ein unkritisches Objekt (30, 70) und über zumindest ein kritisches Objekt (40) in dem Teil des Arbeitsbereichs und/oder der Umgebung (11) des Industrieroboters (10) zu gewinnen,
wobei die Verarbeitungsvorrichtung dazu ausgebildet ist, insbesondere zu bestimmten Zeitpunkten während des Ablaufs einer Aktion des Industrieroboters (10),
diejenigen Datenanteile über das unkritische Objekt (30, 70) in den gewonnenen Abstandsdaten zu erkennen,
die gewonnenen Abstandsdaten zu bearbeiten,
das kritische Objekt (40) in den bearbeiteten Abstandsdaten zu erkennen, und
auf die Erkennung des kritischen Objekts (40) hin den Industrieroboter (10) in einen abgesicherten Steuerungsmodus zu versetzen,
**dadurch gekennzeichnet, dass**
die Verarbeitungsvorrichtung dazu ausgebildet ist, die gewonnenen Abstandsdaten anhand der erkannten Datenanteile über das unkritische Objekt (30, 70) zu bearbeiten, wobei die erkannten Datenanteile über das unkritische Objekt (30, 70) aus den gewonnen Abstandsdaten gefiltert werden.

2. System (100) nach Anspruch 1, wobei die Datenanteile über das unkritische Objekt (30, 70) zu den bestimmten Zeitpunkten während des Ablaufs der Aktion des Industrieroboters (10) vorbekannt sind.

3. System (100) nach Anspruch 1 oder 2,
wobei das System (100) zumindest einen Encoder zur Erkennung und Bestimmung der Bewegung des Industrieroboters (10) umfasst,
wobei der Encoder vorzugsweise dazu ausgebildet ist, den Start des Ablaufs der Aktion des Industrieroboters (10), die bestimmten Zeitpunkte während des Ablaufs der Aktion des Industrieroboters (10) und/oder das Ende des Ablaufs der Aktion des Industrieroboters (10) mit allen Umgebungssensoren (20, 50, 60) zu synchronisieren.

4. System (100) nach einem der voranstehenden Ansprüche, wobei die Verarbeitungsvorrichtung dazu ausgebildet ist, die Datenanteile über das unkritische Objekt (30, 70) anhand eines erwarteten Abstands, anhand einer erwarteten Position, anhand einer erwarteten Bewegungsgeschwindigkeit, anhand einer erwarteten Bewegungsrichtung, anhand einer erwarteten Größe und/oder anhand einer erwarteten Intensität des unkritischen Objekts (30, 70) zu erkennen.

5. System (100) nach Anspruch 3 und 4, wobei das System (100) zumindest einen Encoder zur Erkennung und Bestimmung der Bewegung des unkritischen Objekts (30, 70) umfasst, wobei die erwartete Position, Bewegungsgeschwindigkeit und/oder Bewegungsrichtung des unkritischen Objekts (30, 70) zumindest anhand von mittels des Encoders erfassten Daten bestimmt wird.

6. System (100) nach einem der voranstehenden Ansprüche, wobei die Abstandsdaten Abstandswerte und/oder Intensitätswerte umfassen, wobei die Abstandsdaten zusätzlich Geschwindigkeitswerte umfassen, wobei die Verarbeitungsvorrichtung dazu ausgebildet ist,
bei der Erkennung der Datenanteile über das unkritische Objekt (30, 70) nur die Abstandswerte in den gewonnen Abstandsdaten zu berücksichtigen, oder
bei der Erkennung der Datenanteile über das unkritische Objekt (30, 70) die Abstandswerte, die Intensitätswerte und die Geschwindigkeitswerte in den gewonnen Abstandsdaten zu berücksichtigen.

7. System (100) nach einem der voranstehenden Ansprüche, wobei die Verarbeitungsvorrichtung und der Umgebungssensor (20, 50, 60) miteinander in einer sicheren Signalverbindung stehen, wobei der Umgebungssensor (20, 50, 60) vorzugsweise ein sicheres Signal mit den Abstandsdaten mittels eines sicheren Sendeprotokolls an die Verarbeitungsvorrichtung sendet.

8. System (100) nach einem der voranstehenden Ansprüche, wobei der Umgebungssensor (20, 50, 60) als Sicherheitssensor ausgebildet ist.

9. System (100) nach einem der voranstehenden Ansprüche, wobei die Verarbeitungsvorrichtung dazu ausgebildet ist,
eine Position, einen Abstand, eine Größe, eine Bewegungsrichtung, eine Bewegungsgeschwindigkeit, und/oder eine Intensität des kritischen Objekts (40) anhand der bearbeiteten Abstandsdaten zu bestimmen, und
das kritische Objekt (40) anhand seiner bestimmten Position, seines bestimmten Abstands, seiner bestimmten Größe, seiner bestimmten Bewegungsrichtung, seiner bestimmten Bewegungsgeschwindigkeit, und/oder seiner bestimmten Intensität zu erkennen,
wobei die Verarbeitungsvorrichtung vorzugsweise dazu ausgebildet ist, das kritische Objekt (40) in Abhängigkeit von seinem bestimmten Abstand und/oder seiner bestimmten Größe zu erkennen.

10. System (100) nach einem der voranstehenden Ansprüche, wobei die Verarbeitungsvorrichtung dazu ausgebildet ist, anhand der bearbeiteten Abstandsdaten die Größe und den Abstand des kritischen Objekts (40) zu bestimmen und das kritische Objekt (40) daran zu erkennen, dass seine bestimmte Größe in Abhängigkeit von seinem bestimmten Abstand gleich oder größer als ein erster Größengrenzwert ist und gleich oder kleiner als ein zweiter Größengrenzwert ist.

11. System (100) nach einem der voranstehenden Ansprüche,
wobei der abgesicherte Steuerungsmodus ein Absenken einer Bewegungsgeschwindigkeit des Industrieroboters (10), eine Verlangsamung des Industrieroboters (10), ein Verfahren des Industrieroboters (10) in eine Halteposition, eine Änderung der Bewegungsrichtung des Industrieroboters (10), eine Änderung einer Route des Industrieroboters (10), eine Stilllegung des Industrieroboters (10), ein Stoppen der Bewegung des Industrieroboters (10), eine Umleitung des Industrieroboters (10), eine Änderung eines Bewegungsablaufs des Industrieroboters (10), und/oder eine Änderung einer von dem Industrieroboter (10) ausgeführten Aktion umfasst,
wobei der abgesicherte Steuerungsmodus vorzugsweise in Abhängigkeit von der bestimmten Position des kritischen Objekts (40) gewählt wird.

12. System (100) nach einem der voranstehenden Ansprüche,
wobei das System (100) zumindest einen LiDAR-Sensor (20) umfasst, wobei der LiDAR-Sensor (20) vorzugsweise im Wesentlichen zentral von oben auf den Teil des Arbeitsbereichs und/oder der Umgebung (11) des Industrieroboters (10) gerichtet ist; und/oder
wobei das System (100) zumindest zwei Radar-Sensoren (50, 60) umfasst, wobei die Radar-Sensoren (50, 60) vorzugsweise von jeweils zwei unterschiedlichen, bevorzugt gegenüberliegenden, Seiten auf den Teil des Arbeitsbereichs und/oder der Umgebung (11) des Industrieroboters (10) gerichtet sind.

13. System (100) nach einem der voranstehenden Ansprüche, wobei die Verarbeitungsvorrichtung dazu ausgebildet ist, die Datenanteile über das unkritische Objekt (30, 70) einschließlich eines Toleranzbereichs (80) um das unkritische Objekt (30, 70) in den gewonnenen Abstandsdaten zu erkennen und die gewonnenen Abstandsdaten anhand der erkannten Datenanteile über das unkritische Objekt (30, 70) einschließlich des Toleranzbereichs (80) zu bearbeiten.

14. Verwendung eines Systems (100) nach einem der voranstehenden Ansprüche zur sicheren Steuerung zumindest eines Industrieroboters (10), insbesondere eines Krans zum Bewegen von Containern.

15. Verfahren zur sicheren Steuerung zumindest eines Industrieroboters (10), insbesondere eines Krans zum Bewegen von Containern,
wobei zumindest ein Teil eines Arbeitsbereichs und/oder einer Umgebung (11) des Industrieroboters (10) mittels zumindest eines Umgebungssensors (20, 50, 60) erfasst wird und dabei Abstandsdaten über zumindest ein unkritisches Objekt (30, 70) und über zumindest ein kritisches Objekt (40) in dem Teil des Arbeitsbereichs und/oder der Umgebung (11) des Industrieroboters (10) gewonnen werden, und
wobei, insbesondere zu bestimmten Zeitpunkten während des Ablaufs einer Aktion des Industrieroboters (10),
diejenigen Datenanteile über das unkritische Objekt (30, 70) in den gewonnenen Abstandsdaten erkannt werden,
die gewonnenen Abstandsdaten bearbeitet werden,
das kritische Objekt (40) in den bearbeiteten Abstandsdaten erkannt wird, und
auf die Erkennung des kritischen Objekts (40) hin der Industrieroboter (10) in einen abgesicherten Steuerungsmodus versetzet wird
**dadurch gekennzeichnet, dass**
die gewonnenen Abstandsdaten anhand der erkannten Datenanteile über das unkritische Objekt (30, 70) bearbeitet werden, wobei die erkannten Datenanteile über das unkritische Objekt (30, 70) aus den gewonnen Abstandsdaten gefiltert werden.
